# EUROPEAN PATENT APPLICATION

(11) **EP 4 737 152 A1**
(43) Date of publication of application: **06.05.2026**
(21) Application number: 24209353.2
(22) Date of filing: 29.10.2024
(51) Int. Cl.: B60K 1/04

(54) **A MOUNTING FRAME ARRANGEMENT FOR ELECTROCHEMICAL POWER UNITS AND A SYSTEM**

(71) Applicant: Volvo Truck Corporation, 405 08 Göteborg (SE)
(72) Inventor: HU, Wenting, 405 08 GÖTEBORG (SE); ROY, Sanchayan, 436 35 GÖTEBORG (SE)
(74) Representative: Kransell & Wennborg KB

(57) **Abstract**

The present disclosure relates to a mounting frame arrangement (30) for securing at least one electrochemical power unit (20, 20a to 20n) to a chassis (2) of a vehicle (1), wherein the mounting frame arrangement comprises: a coupling interface (35) for attachment of the mounting frame arrangement to the chassis; and a docking interface (40) configured to dock the at least one electrochemical power unit (20a) to the mounting frame arrangement, wherein the docking interface comprises a cooling system interconnection interface (50) for the at least one electrochemical power unit, and an electrical connection interconnection interface (55, 58) for the at least one electrochemical power unit.

## Description

### TECHNICAL FIELD

The disclosure relates generally to a mounting frame arrangement for electrochemical power units of a vehicle. In particular aspects, the disclosure relates to electrical energy storage systems for vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure may also be applicable to marine vehicle applications. Additionally, the disclosure may be used in a number of different types of electric-powered vehicles such as fully electrical vehicles, partly electrical vehicles e.g. hybrid vehicles and vehicles having an internal combustion engine and an electrical machine, fuel cells and an electrical machine etc.

### BACKGROUND

In the field of electrochemical power units, such as batteries and fuel cells for vehicles, various systems have been developed for storing and connecting power units to the electric propulsion system. Electrochemical power units are typically responsible for powering the vehicle itself and for supplying energy to auxiliary electrical systems. As vehicle electrification progresses, the demand for reliable, high-capacity energy storage solutions continues to increase.

An electrochemical power unit typically comprises multiple battery cells or fuel cells, connected in series or parallel, forming an integrated system capable of delivering the required energy. A challenge in such systems involves improving the placement of the power units within the vehicle.

Although advancements have been made in the design of power unit systems, there remains a need to further improve the integration of electrochemical power units in vehicles.

### SUMMARY

According to a first aspect of the disclosure, there is provided a mounting frame arrangement for securing at least one electrochemical power unit to a chassis of a vehicle. The mounting frame arrangement comprises a coupling interface for attachment of the mounting frame arrangement to the chassis; a docking interface configured to dock the at least one electrochemical power unit to the mounting frame arrangement. Moreover, the docking interface comprises a cooling system interconnection interface for the at least one electrochemical power unit; an electrical connection interconnection interface for the at least one electrochemical power unit.

The disclosure is at least partly based on the insight that integrating electrochemical power units into a vehicle requires a system that may not only provide a stable mechanical interface but also facilitates the secure and efficient transfer of coolant, electrical power, and/or signals between the power units and the relevant sub-systems. In addition, it has been observed that hitherto known prior art systems may not adequately account for the separation of cooling and electrical systems or may pose risks in terms of electrical interference and water leakage.

The first aspect of the disclosure may seek to improve the integration of multiple electrochemical power units in vehicles, while addressing challenges related to the safe transfer of power, signals, and coolant. More specifically, the disclosure may seek to contribute to a more reliable mechanical attachment while minimizing, or at least reducing, risks associated with thermal-electrical interference and potential water ingress over the lifetime of the electrochemical power units. By facilitating easier assembly, disassembly, and aftermarket access, the disclosure also addresses the need for operational efficiency in the handling of such systems.

A technical benefit may include an improved mounting of one or more electrochemical power units to a chassis of a vehicle, such as a heavy-duty vehicle. The multi-functional docking interface arranged in the mounting frame arrangement ensures that the complementary interface of the electrochemical power unit can be securely docked to the mounting frame arrangement. By incorporating both the coupling interface and the docking interface, the mounting frame arrangement is configured to serve as an intermediate load-bearing system that extends between the electrochemical power unit and the chassis, effectively acting as the primary load-bearing structure. In this manner, the mounting frame arrangement allows for more efficient distribution of forces and facilitates the transfer of power and coolant through the system.

Additionally, the mounting frame arrangement may simplify assembly and disassembly processes, enabling quick access to cooling and electrical interfaces, which can be particularly beneficial for aftermarket maintenance.

The mounting frame arrangement is particularly useful for an electric-powered vehicle, such as an electric truck, electric bus or the like, i.e. a full electric vehicle. However, the mounting frame arrangement may likewise be installed in a partly electric-powered vehicle, such as a hybrid vehicle.

Optionally in some examples, including in at least one preferred example, the docking interface may comprise a positioning supporting arrangement for the at least one electrochemical power unit, the positioning supporting arrangement being configured to guide the at least one electrochemical power unit into a docking position relative to the mounting frame arrangement. A technical benefit may include facilitating precise docking of the electrochemical power unit through a positioning supporting arrangement. By guiding the electrochemical power unit into its respective docking positions, the system allows for a more accurate mechanical alignment and reduces the risk of misalignment during installation.

Optionally in some examples, including in at least one preferred example, the positioning supporting arrangement may comprise one or more guide pins for guiding the at least one first electrochemical power unit into the docking position relative to the mounting frame arrangement. A technical benefit may include enhanced accuracy during the docking process through the use of guide pins. These guide pins assist in positioning the electrochemical power unit correctly within the mounting frame arrangement, leading to faster assembly and minimizing, or at least reducing, the potential for alignment errors.

Optionally in some examples, including in at least one preferred example, the mounting frame arrangement may comprise a plurality of chambers for individual accommodation of a first internal coolant conduit in a first chamber, a second internal coolant conduit in a second chamber, and an electric cable arrangement in a third chamber. The arrangement of separate chambers for cooling and electrical systems provides physical isolation between thermal and electrical components. In this manner, the risk of interference is reduced, or even minimized, and the likelihood of coolant leakage compromising electrical connections is reduced, leading to improved long-term reliability of the system. The chamber arrangement within the mounting frame arrangement may also contribute to reinforcing the overall structure, enhancing both durability and structural integrity.

Optionally in some examples, including in at least one preferred example, the chambers extend within the frame mounting arrangement, and from opposite sides of the frame mounting arrangement. Such configuration may allow for connecting coolant and electric energy transferred within the respective chambers to other components and/or system within the vehicle.

Optionally in some examples, including in at least one preferred example, the chambers may be separated from each other in the mounting frame arrangement by corresponding wall segments. A technical benefit may include enhanced structural integrity through the separation of chambers using wall segments. Such design thus isolates the cooling and electrical systems in an effective manner, while also strengthening the overall frame structure.

Optionally in some examples, including in at least one preferred example, the mounting frame arrangement may further comprise an upper side segment, a lower side segment and one or more end segments extending between the upper side segment and the lower side segment. A technical benefit may include increased rigidity and durability of the mounting frame arrangement through the inclusion of an upper side segment, lower side segment, and one or more end segments. Such structural reinforcement supports the overall stability of the frame, particularly under mechanical stresses.

Optionally in some examples, including in at least one preferred example, the electrical connection interconnection interface may comprise a high-voltage HV interconnection interface for the at least one electrochemical power unit and a low-voltage LV interconnection interface for the at least first electrochemical power unit, and wherein the HV interconnection interface and the LV interconnection interface are arranged in separate chambers of the mounting frame arrangement. A technical benefit may include improved separation of high-voltage (HV) and low-voltage (LV) systems, ensuring that the HV interconnection interface and the LV interconnection interface are housed in separate chambers. Such isolation may enhance safety by reducing the risk of electrical interference between the different voltage systems and provides added protection against potential electrical faults or shorts.

Optionally in some examples, including in at least one preferred example, the mounting frame arrangement may further comprise a fastening system configured to mechanically connect the at least one electrochemical power unit to the mounting frame arrangement. A technical benefit may include a secure and stable mechanical connection of the electrochemical power unit to the mounting frame arrangement. Ensuring proper attachment reduces the risk of movement or displacement during vehicle operation, improving the reliability and safety of the system.

Optionally in some examples, including in at least one preferred example, the coupling interface may be configured to couple the mounting frame arrangement to one or more longitudinal sides of a frame structure of the chassis.

Optionally in some examples, including in at least one preferred example, the coupling interface may be configured to couple the mounting frame arrangement to opposite longitudinal sides of a frame structure of the chassis. A technical benefit may include improved structural integration by coupling the mounting frame arrangement to the opposite longitudinal sides of the vehicle's chassis frame. Such configuration allows for better load distribution across the chassis, contributing to greater stability and durability under operational stress.

Optionally in some examples, including in at least one preferred example, the mounting frame arrangement may further comprise an inlet for coolant, an outlet for coolant, and an electrical connection interface.

Optionally in some examples, including in at least one preferred example, the mounting frame arrangement may further comprise an inlet for coolant, an outlet for coolant, and an electrical connection interface.

Optionally in some examples, including in at least one preferred example, the mounting frame arrangement may comprise an additional inlet for coolant, an additional outlet for coolant, and an additional electrical connection interface.

Optionally in some examples, including in at least one preferred example, the at least one electrochemical power unit may be provided in the form of a battery module comprising battery cells. Optionally in some examples, including in at least one preferred example, the at least one electrochemical power unit may be provided in the form of a fuel cell system comprising fuel cells.

Optionally in some examples, including in at least one preferred example, the mounting frame arrangement may be an extruded profile structure. A technical benefit may include manufacturing efficiency and consistent structural performance due to the use of an extruded profile structure. Extrusion allows for precise shaping of the frame, resulting in a lightweight yet robust mounting frame that balances strength with cost-effectiveness.

Optionally in some examples, including in at least one preferred example, the at least one electrochemical power unit is a first electrochemical power unit, and wherein the mounting frame arrangement further comprises a corresponding docking interface configured to dock a second electrochemical power unit to the mounting frame arrangement. Hereby, there is provided a mounting frame arrangement for securing multiple electrochemical power units to the chassis of a vehicle. Optionally in some examples, including in at least one preferred example, the second electrochemical power unit may be provided in the form of a battery module comprising battery cells. Optionally in some examples, including in at least one preferred example, the second electrochemical power unit may be provided in the form of a fuel cell system comprising fuel cells.

Optionally in some examples, including in at least one preferred example, both the first electrochemical power unit and the second electrochemical power unit are provided in the form of battery modules comprising battery cells. Optionally in some examples, including in at least one preferred example, both the first electrochemical power unit and the second electrochemical power unit are provided in the form of fuel cell stacks comprising fuel cells. In one example, where the first electrochemical power unit and the second electrochemical power unit may be provided in the form of battery modules, a technical benefit may include the use of a fully electric energy storage solution. Battery modules offer consistent power output, making them suitable for vehicles operating in predictable, stop-and-go urban environments. In another example, where the first electrochemical power unit and the second electrochemical power unit may be provided in the form of fuel cell stacks, a technical benefit may include an improved extended range and faster refueling times. In a further example, where the first electrochemical power unit is provided in the form of a battery module and the second electrochemical power unit is provided in the form of a fuel cell stack, a technical benefit may include a hybrid energy storage solution. For example, batteries placed on the top of the mounting frame could deliver short-term power and enable regenerative braking, while fuel cells located on the bottom are used to extend the vehicle's range and reduce dependency on charging infrastructure.

Optionally in some examples, including in at least one preferred example, the docking interface may be arranged on an upper side of the mounting frame arrangement so as to dock the first electrochemical power unit to the upper side, and the corresponding docking interface is arranged on a lower side of the mounting frame arrangement so as to dock the second electrochemical power unit to the lower side. A technical benefit may include greater flexibility in mounting the electrochemical power units, with one connected to the upper side and the other to the lower side of the mounting frame. Such an arrangement may improve space utilization and enhance the weight distribution within the vehicle, improving overall vehicle performance.

Optionally in some examples, including in at least one preferred example, the docking interface and the corresponding docking interface may be arranged on a lower side of the mounting frame arrangement so as to dock the first electrochemical power unit and the second electrochemical power unit to the lower side of the mounting frame arrangement. A technical benefit may include ease of access to the electrochemical power units by connecting them to the lowermost side of the mounting frame. Such configuration may simplify service and maintenance procedures, particularly in applications where ground-level access is critical.

Optionally in some examples, including in at least one preferred example, the first electrochemical power unit and the second electrochemical power unit may be individually connected to the mounting frame arrangement in a side-by-side arrangement, as seen in a transverse direction of the mounting frame arrangement. A technical benefit may include the arrangement of electrochemical power units in a side-by-side configuration, allowing for better use of available space and easier access to individual units. Such setup may also simplify maintenance tasks by enabling quick access to each unit independently.

Optionally in some examples, including in at least one preferred example, the first electrochemical power unit and the second electrochemical power unit may be individually connected to a ground-facing side of the mounting frame arrangement.

According to a second aspect of the disclosure, there is provided an electrical energy storage system comprising at least a first electrochemical power unit, a second electrochemical power unit and a mounting frame arrangement according to the first aspect of the disclosure. Effects and features of this second aspect of the present disclosure are largely analogous to those described above in connection with the first aspect of the disclosure. Examples mentioned in relation to the first aspect of the present disclosure are largely compatible with the second aspect of the disclosure. Another technical benefit may include the integration of a complete electrical energy storage system comprising multiple electrochemical power units and the mounting frame arrangement. Such system provides a secure and cohesive arrangement for storing and managing electrical energy within a vehicle, streamlining assembly and enhancing overall efficiency.

According to a third aspect of the disclosure, there is provided a vehicle comprising a mounting frame arrangement according to the first aspect of the disclosure and/or an electrical energy storage system according to the second aspect of the disclosure. Effects and features of the third aspect of the present disclosure are largely analogous to those described above in connection with the first and second aspects of the disclosure. Examples mentioned in relation to the first and second aspects of the present disclosure are largely compatible with the third aspect of the disclosure.

The vehicle may comprise a chassis. Further, the vehicle typically comprises an electric propulsion system including the electrical energy storage system. The vehicle may be an electrical, hybrid, or plug-in hybrid vehicle. Thus, the vehicle may be a fully electrical vehicle or a partly (i.e. a hybrid) electrical vehicle. The vehicle typically comprises at least one electric machine, but may include additional electrical machines. The electrical machine(s) are configured to provide propulsion for the vehicle. Generally, the term "electric propulsion system", as used herein, typically refers to vehicle electrical components for providing energy (such as traction energy) and for storing energy (delivering and receiving energy). In other words, an electric propulsion system refers to a system configured to provide propulsion to a vehicle by converting electrical energy to mechanical energy, the electrical energy provided by means of the electrical energy storage system, such as the battery pack system. Besides the electrical components as mentioned above, an electric propulsion system may include additional components such as cable(s), sensor(s), control units, battery management unit(s) etc. The electric propulsion system is in particular configured to deliver and receive energy for providing propulsion to the vehicle, but also for performing various vehicle operations of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 schematically illustrates a vehicle comprising a mounting frame arrangement for securing a plurality of electrochemical power units to a chassis of a vehicle according to an example.
FIG. 2 schematically illustrates a mounting frame arrangement according to an example.
FIGS. 3 to 9 schematically show various views of a mounting frame arrangement according to various examples.

### DETAILED DESCRIPTION

The detailed description set forth below provides information and examples of the disclosed technology with sufficient detail to enable those skilled in the art to practice the disclosure.

The present disclosure is at least partly based on the insight that integrating electrochemical power units into a vehicle requires a system that may not only provide a stable mechanical interface but also facilitates the secure and efficient transfer of coolant, electrical power, and signals between the power units and the relevant sub-systems. In addition, it has been observed that hitherto known prior art systems may not adequately account for the separation of cooling and electrical systems or may pose risks in terms of electrical interference and water leakage.

For these and other reasons, there is still a need for improving the integration of one or more electrochemical power units in vehicles, addressing challenges related to the safe transfer of power, signals, and coolant. More specifically, the disclosure may seek to contribute to a more reliable mechanical attachment while minimizing, or at least reducing, risks associated with thermal-electrical interference and potential water ingress over the lifetime of the electrochemical power units. By facilitating easier assembly, disassembly, and aftermarket access, the disclosure also addresses the need for operational efficiency in the handling of such systems.

A technical benefit may include an improved mounting of one or more electrochemical power units to a chassis of a vehicle, such as a heavy-duty vehicle. The multi-functional docking interface ensures that the complementary interface of the electrochemical power unit can be securely docked to the mounting frame arrangement. By incorporating both the coupling interface and the docking interface, the mounting frame arrangement is configured to serve as an intermediate load-bearing system that extends between the electrochemical power unit and the chassis, effectively acting as the primary load-bearing structure. In this manner, the mounting frame arrangement allows for more efficient distribution of forces and facilitates the transfer of power and coolant through the system. Additionally, the mounting frame arrangement may simplify assembly and disassembly processes, enabling quick access to cooling and electrical interfaces, which can be particularly beneficial for aftermarket maintenance.

The mounting frame arrangement is particularly useful for an electric-powered vehicle, such as an electric truck, electric bus or the like, i.e. a full electric vehicle. However, the mounting frame arrangement may likewise be installed in a partly electric-powered vehicle, such as a hybrid vehicle.

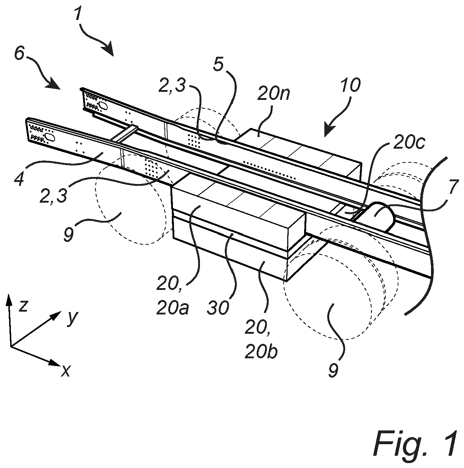

Referring now to the figures and e.g. FIG. 1 there is depicted a vehicle 1 in the form of a truck, in particular an electric-powered heavy-duty truck. The electric-powered truck is here a fully electric truck. Such type of vehicle typically comprises an electric propulsion system 6 for providing propulsion to the electrical truck. Besides providing propulsion to the vehicle 1, the electric propulsion system 6 or parts of such system can manage other electronic functions of the vehicle 1. The electric propulsion system 6 generally comprises one or more electrochemical power units 20, 20a to 20n and one or more electric machines 7. In one example, the electrochemical power unit 20 is an integral part of an energy storage system 10, such as a battery pack arrangement. In other examples, the electrochemical power unit 20 is a fuel cell system. In other examples, the vehicle 1 may comprise a combination of different electrochemical power units 20, e.g. one battery pack arrangement and one fuel cell system. The battery pack arrangement is configured to power one or more electric components, such as e.g. the electric machine(s) 7. The vehicle 1 may further comprise a battery management unit which is configured to control and monitor the battery pack arrangement. The battery management unit can be an integral part of a control system of the electric propulsion system 6 and/or an integral part of a control system of the vehicle 1. The vehicle 1 may likewise be a hybrid electric vehicle comprising one or more battery pack arrangements, one or more fuel cell systems and an internal combustion engine system, such as a hydrogen internal combustion engine system.

The electric machine 7 is configured for driving a pair of ground engaging members 9, as depicted in FIG. 1. In this example, the ground engaging members 9 are provided in the form of wheels. Optional, the electrical propulsions system 6 comprises a transmission for transmitting a rotational movement from the electric machine 7 to a propulsion shaft, sometimes denoted as the driven shaft. The propulsion shaft connects the transmission to the pair of wheels. The electric machine 7 is typically coupled to the transmission by a clutch. The electric machine 7 can also be decoupled from the wheels by means of engaging a neutral gear of the transmission.

In addition, the vehicle 1 comprises a chassis 2, as shown in FIG. 1. The chassis 2 here comprises a frame structure 3. The frame structure 3 is configured to withstand the stresses of heavy loads, uneven terrain, and vibration, distributing forces uniformly across the frame structure. As is illustrated in FIG. 1, the chassis 2 extends in a longitudinal direction X, in a transverse direction Y, and in a vertical direction Z. The longitudinal direction X of the chassis 2 is generally parallel to longitudinal direction of the vehicle 1. In this context, the longitudinal direction X is parallel to an intended direction of travel of the vehicle 1. Hence, the longitudinal direction X of the chassis 2 generally coincides with the longitudinal direction of the vehicle 1. Further, the transverse direction Y is generally perpendicular to each one of the vertical direction Z and the longitudinal direction X. These directions are intended to be interpreted relative to the vehicle 1 and should not be interpreted as being dependent of the vehicle's orientation.

In FIG. 1, the chassis 2 has a first longitudinal side 4 and a second longitudinal side 5. Typically, the frame structure 3 of the chassis 2 comprises the first longitudinal side 4 and the second longitudinal side 5. Moreover, the first longitudinal side 4 and the second longitudinal side 5 are arranged spaced apart from each other in the transverse direction Y. Hence, the first longitudinal side 4 and the second longitudinal side 5 are here opposite arranged longitudinal sides of the frame structure 3. It should be noted that the frame structure 3 may typically comprise one or more transverse beams extending between the first longitudinal side 4 and the second longitudinal side 5.

Moreover, as illustrated in FIG. 1, the vehicle 1 comprises a mounting frame arrangement 30. The mounting frame arrangement 30 is configured to secure at least one electrochemical power unit 20 to the chassis 2. In FIG. 1, the mounting frame arrangement 30 is configured to secure a plurality of electrochemical power units 20, 20a to 20n to the chassis 2.

While the vehicle 1 may only comprise one electrochemical power unit 20, the vehicle 1 here comprises at least a first electrochemical power unit 20a and a second electrochemical power unit 20b. In other examples, the vehicle 1 comprises three electrochemical power units 20a to 20c. The vehicle 1 may comprise more than three electrochemical power units 20.

As is evident from FIG. 1, the mounting frame arrangement 30 here extends in the longitudinal direction X, in the transverse direction Y, and in the vertical direction Z. The mounting frame arrangement 30 extends a substantial part in the longitudinal direction X and a substantial part in the transverse direction Y. Analogously, each one of the electrochemical power units 20, 20a to 20n extends in the longitudinal direction X, in the transverse direction Y, and in the vertical direction Z. Throughout the disclosure of the mounting frame arrangement 30, it should be noted that the terms top, above, upper, upward, below, lower, underneath, downward, bottom, lateral and side as well as any other similar terms are used in reference to the position of the electrochemical power units 20, 20a to 20n relative to the mounting frame arrangement 30 as depicted in the drawings, e.g. FIG. 1.

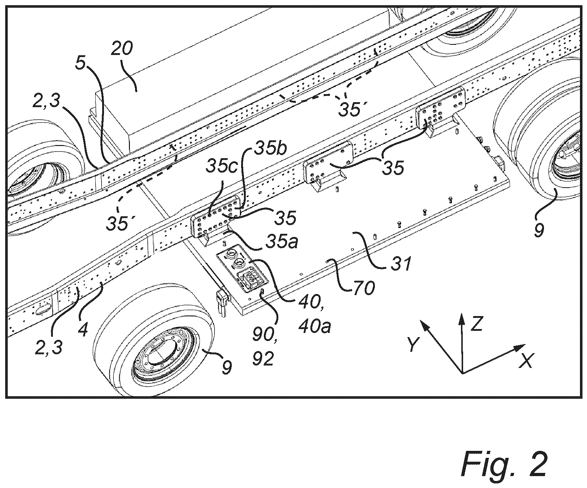

Examples of the mounting frame arrangement 30 will now further be described in relation to FIGS. 2 to 9.

As depicted in FIG. 2, the mounting frame arrangement 30 comprises a coupling interface 35. The coupling interface 35 is configured for attachment of the mounting frame arrangement 30 to the chassis 2, as illustrated in FIG. 2. The coupling interface 35 is configured to ensure a stable and secure connection between the mounting frame arrangement 30 and the chassis 2. The coupling interface 35 typically refers to an interface providing a permanent connection, or at least a semi-permanent connection, used to attach two structural components, such as the attachment of the mounting frame arrangement 30 to the chassis 2.

The coupling interface 35 is configured to mechanically attach the mounting frame arrangement 30 to the chassis 2. The coupling interface 35 can be designed in several different ways. For example, as illustrated in FIG. 2, the coupling interface 35 is a bracket arrangement. The coupling interface 35 here comprises a first plate 35a attached to an upper side 31 of the mounting frame arrangement 30 and a second plate 35b configured to be attached to the chassis 2. In this example, the mounting frame arrangement 30 comprises three coupling interfaces 35, but the number of coupling interfaces 35 can be varied for different types of vehicles 1. In one example, there is only one single coupling interface 35 extending along the longitudinal direction X of the mounting frame arrangement 30.

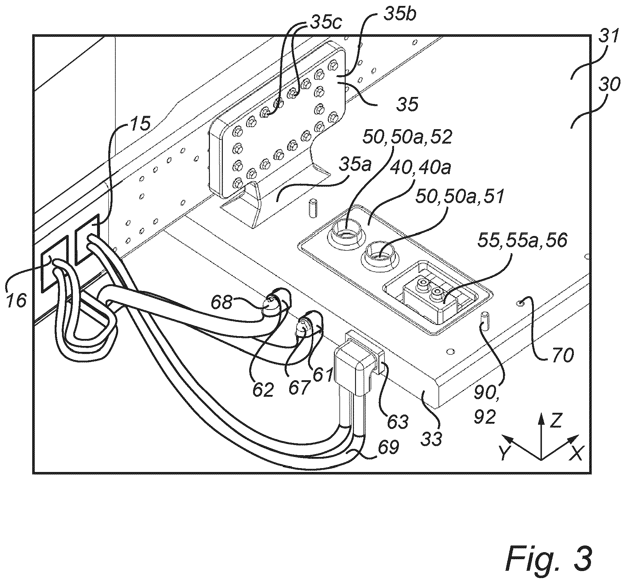

As may be seen from FIGS. 2 and 3, the mounting frame arrangement 30 is here coupled by a plurality of coupling interfaces 35, 35' to the opposite longitudinal sides 4, 5 of the frame structure 3. The coupling interfaces 35, 35' are thus provided as separate coupling interface portions.

By the arrangement of the coupling interfaces 35, 35', the mounting frame arrangement 30 can be coupled to the chassis 2 in a secure manner, thus providing structural support and load bearing for the electrochemical power unit(s) 20.

The coupling interface 35 can be coupled to the chassis 2 by a suitable fastening system arrangement 35c, such as bolts. In other examples, the coupling interface 35 may be welded, or mechanically fastened to the chassis 2 in a way that creates a sufficiently strong and rigid attachment of the mounting frame arrangement 30 to the chassis 2.

Referring again to FIG. 2, the mounting frame arrangement 30 further comprises a docking interface 40. The docking interface 40 is here configured to dock at least the first electrochemical power unit 20a to the mounting frame arrangement 30. The docking interface 40 ensures that the electrochemical power unit 20a is securely docked and correctly aligned to the mounting frame arrangement 30. The docking interface 40 typically refers to a connection designed for repeated interconnection of components. The docking interface 40 is here used for components that need to be connected and disconnected frequently or with ease, such as the electrochemical power units 20. In this context, the docking interface typically refers to a connection system for a cooling system and an electrical connector system, which is configured to securely attach and integrate e.g. a battery module into a vehicle, enabling the transfer of coolant, power, data, and signals between the battery module and one or more systems arranged in the vehicle 1.

As illustrated further in FIGS. 2 to 9, the docking interface 40 is designed for aligning, connecting, and securing at least one electrochemical power unit 20, such as the electrochemical power unit 20a, to the mounting frame arrangement 30. In this example, the electrochemical power unit 20a is a battery pack. The docking interface 40 allows for easy removal or replacement of the battery pack 20 in that the docking interface provides for complete docking of the battery pack 20 to the mounting frame arrangement 30.

As such, the docking interface 40 also comprises a cooling system interconnection interface 50. The cooling system interconnection interface 50 is configured to transfer coolant to the electrochemical power unit 20 and receive coolant from the electrochemical power unit 20. One example of the cooling system interconnection interface 50 is depicted in FIG. 3. FIG. 3 depicts a first cooling system interconnection interface 50, 50a for the first electrochemical power unit 20a.

The cooling system interconnection interface 50 comprises an outlet 51 for coolant and an inlet 52 for coolant. The outlet 51 is typically configured to route coolant of a low temperature to cool parts of the electrochemical power unit 20 and the inlet 52 is typically configured to receive coolant returning from the electrochemical power unit 20. The coolant returning from the electrochemical power unit 20 is here of a higher temperature than the coolant at the inlet 52.

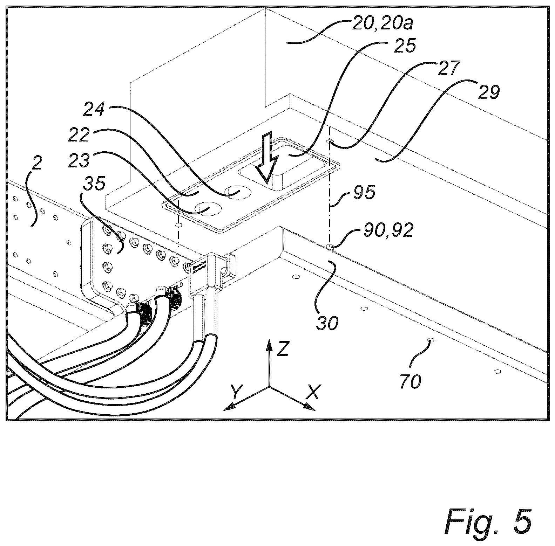

Moreover, as shown in FIG. 5, the electrochemical power unit 20 comprises a corresponding interface 22. The corresponding interface 22 comprises a complementary interface as the interface of the docking interface 40. In this example, the interface 22 is arranged at a side 29 of the electrochemical power unit 20, such as the bottom side of electrochemical power unit 20, as shown in FIG. 5. The interface 22 is configured for interconnection with the docking interface 40 of the mounting frame arrangement 30. Accordingly, the interface 22 of the electrochemical power unit 20 comprises a corresponding cooling system interconnection interface having a corresponding inlet 23 for interconnection to the outlet 51 and a corresponding outlet 24 for interconnection to the inlet 52.

Referring again to FIG. 3, the docking interface 40 also comprises at least one electrical connection interconnection interface 55 for the electrochemical power unit 20. The electrical connection interconnection interface 55 is here configured to transfer electrical energy (power) to the electrochemical power unit 20 and to receive electrical energy (power) to the electrochemical power unit 20.

FIG. 3 depicts a first electrical connection interconnection interface 55, 55a for the first electrochemical power unit 20a. In this example, the electrical connection interconnection interface 55, 55a is configured to transfer high voltage (HV). Hence, the electrical connection interconnection interface 55, 55a is here provided in the form of a high-voltage electrical connection interconnection interface 56. High voltage here typically refers to a voltage ranging from 200V to 800V, or higher. The high-voltage electrical connection interconnection interface 56 is configured to provide high-voltage transfer between the electrochemical power unit 20, 20a and one or more electric consumers of the vehicle 1, such as the electric machine 7.

In a similar vein, as shown in FIG. 5, the interface 22 of the electrochemical power unit 20 comprises a corresponding electrical connection interconnection interface 25 for interconnection to the electrical connection interconnection interface 55.

By means of the docking interface 40 comprising the electrical connection interconnection interface 55 and the cooling system interconnection interface 50, the mounting frame arrangement 30 is configured to provide a multi-functional docking interface for one or more electrochemical power units 20, in which the one or more electrochemical power units 20 are provided with complementary interfaces 22 matching the interface of the mounting frame arrangement 30.

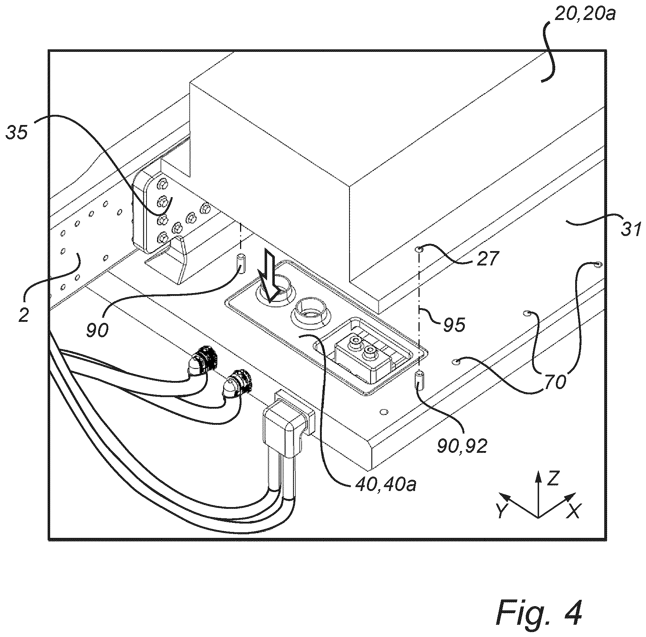

Turning again to FIGS. 2 to 5, the mounting frame arrangement 30 further comprises a positioning supporting arrangement 90 for the electrochemical power unit 20, such as first electrochemical power unit 20a. The positioning supporting arrangement 90 is configured to guide the first electrochemical power unit 20a into a docking position 95 relative to the mounting frame arrangement 30. The docking position 95 is indicated in FIGS. 4 and 5 by the dashed line. In the docking position 95, the docking interface 40 is aligned with the corresponding interface 22 of the electrochemical power unit 20.

For example, as shown in FIGS. 2 to 5, the positioning supporting arrangement 90 comprises one or more guide pins 92, 92a to 92n for guiding the electrochemical power unit 20 into the docking position 95 relative to the mounting frame arrangement 30.

Typically, the electrochemical power unit 20 comprises a complementary positioning guiding system 27 configured to interact with the positioning supporting arrangement 90 so as to align the position of the docking interface 40 with the interface 22.

The actual operation of positioning the electrochemical power unit 20 into the docking position 95 relative to the mounting frame arrangement 30 is here performed by any one of a user, a robot system, and an external docking control system, including e.g. a forklift or the like.

Subsequently, when the electrochemical power unit 20 is controlled into the docking position 95 relative to the mounting frame arrangement 30 via the positioning supporting arrangement 90, the electrochemical power unit 20 is here connected to the mounting frame arrangement 30 through a fastening system 70. For example, the electrochemical power unit 20 is mechanically connected to the mounting frame arrangement 30 through a fastening system 70 in the form of one or more bolts, or the like. Other types of fastening systems may also be conceivable, such as electro-magnetic systems.

Accordingly, as shown in FIGS. 2 to 5, the mounting frame arrangement 30 here comprises the fastening system 70. The fastening system 70 is typically configured to mechanically connect the electrochemical power unit 20 to the mounting frame arrangement 30. Typically, the electrochemical power unit 20 comprises a complementary fastening system for engaging with fastening system 70, such as a threaded recess for engaging with the bolt of the fastening system 70. Hence, the electrochemical power unit 20 is configured to be mechanically connected to the mounting frame arrangement 30.

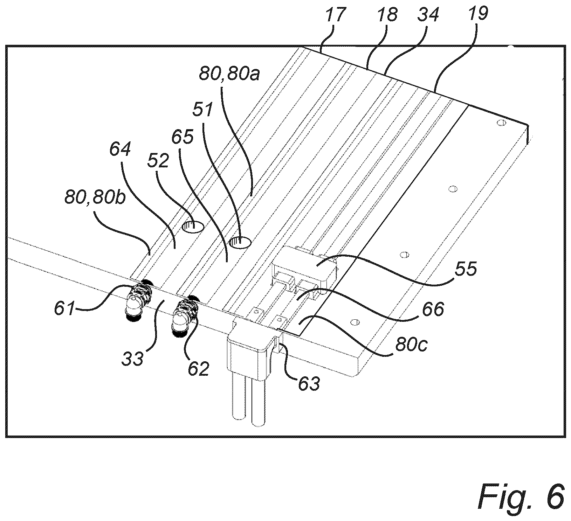

The coolant can be routed through the mounting frame arrangement 30 in several different manners. FIG. 3 in combination with FIG. 6 depicts one example for routing coolant through the mounting frame arrangement 30 to the docking interface 40. The mounting frame arrangement 30 here comprises an inlet 61 for coolant, an outlet 62 for coolant, and an electrical connection interface 63, such as an electrical socket. In this example, the inlet 61 for coolant, the outlet 62 for coolant, and the electrical connection interface 63 are arranged at a side 32 of the electrochemical power unit 20, such as a transverse side of the electrochemical power unit 20a. The inlet 61 for coolant, the outlet 62 for coolant, and the electrical connection interface 63 can be arranged at several different locations on a side or a part of the mounting frame arrangement 30.

As shown in FIG. 6, the coolant inlet 61 is configured to be fluidly connected to the coolant outlet 51. The coolant inlet 61 is fluidly connected to the coolant outlet 51 by a first internal coolant conduit 65 arranged within the mounting frame arrangement 30. Hence, the mounting frame arrangement 30 comprises the first internal coolant conduit 65. The first internal coolant conduit 65 extends between the coolant inlet 61 and the coolant outlet 51. In this manner, coolant can be routed from the coolant inlet 61 to the coolant outlet 51.

As shown in FIG. 3, the coolant inlet 61 is configured to be fluidly connected to a coolant system 16 of the vehicle 1. The coolant inlet 61 is fluidly connected to the coolant system 16 of the vehicle 1 by a first coolant conduit 67 extending between the coolant system 16 and the coolant inlet 61. In this manner, the coolant inlet 61 receives coolant for transportation through the coolant conduit 65 to the coolant outlet 51.

The coolant inlet 61 and the first internal coolant conduit 65 are typically configured to route coolant of a low temperature to the outlet 51.

Analogously, as shown in FIG. 6, the coolant outlet 62 is configured to be fluidly connected to the coolant inlet (return path) 52. The coolant outlet 62 is fluidly connected to the coolant inlet 52 by a second internal coolant conduit 64 arranged within the mounting frame arrangement 30. Hence, the mounting frame arrangement 30 comprises the second internal coolant conduit 64. The second internal coolant conduit 64 extends between the coolant outlet 62 and the coolant inlet 52. In this manner, coolant can return from the coolant outlet 62 to the coolant inlet 52.

As shown in FIG. 3, the coolant outlet 62 is configured to be fluidly connected to the coolant system 16 of the vehicle 1. The coolant outlet 62 is fluidly connected to the coolant system 16 of the vehicle 1 by a second coolant conduit 68 extending between the coolant system 16 and the coolant outlet 62. In this manner, the coolant outlet 62 returns coolant from the electrochemical power unit 20 (via transportation to the inlet 52 and through the coolant conduit 64). The coolant returning from the electrochemical power unit 20 via the outlet 62 is here of a higher temperature than the coolant at the inlet 61.

The coolant system 16 and the coolant can be provided in several different manners. For example, the coolant is a liquid. One example of a suitable liquid is water and ethylene glycol mixture. The coolant may also be an oil, or a combination of oil and a water-based fluid. In another example, the coolant may be a fluid such as a gas.

Moreover, as shown in FIG. 6, the electrical connection interface 63 is configured to be electrical connected to the electrical connection interconnection interface 55. The electrical connection interface 63 is electrically connected to the electrical connection interconnection interface 55 by an electric cable arrangement 66 arranged within the mounting frame arrangement 30. Hence, the mounting frame arrangement 30 comprises the electric cable arrangement 66. For example, the electric cable arrangement 66 comprises one or more two phase cables for connection to positive and negative terminals of the battery pack arrangement. Thus, the electric cale arrangement is here shown as an arrangement comprising two cables, including a cable for the positive terminal and a cable for the negative terminal. The electric cable arrangement 66 extends between the electrical connection interface 63 and the electrical connection interconnection interface 55. In this manner, electric power can be transferred between the electrochemical power unit 20 and one or more electric consumers, indicated by reference numeral 15 in FIG. 3. In addition, or alternatively, the electric power can be transferred to an electric consumer in the form of the electric machine 7. The electric consumers can be high voltage and low voltage electric consumers. Examples of high voltage electric consumers are the electric machine, high voltage coolant pump, high voltage compressor, high voltage cab heater etc. Examples of low voltage electric consumers are e.g. infotainment system, interior lighting, climate control systems, windshield wipers, power seats, heaters, and DC-DC converter. Also, it should be evident that there might be more cables(s) accommodated within the electric cable arrangement 66.

As shown in FIG. 3, the electrical connection interface 63 is here connected to the one or more electric consumers 15 by one or more electric cable arrangement(s) 69. In addition, or alternatively, the electrical connection interface 63 is connected to the electrical motor 7 by the electric cable arrangement(s) 69.

By the configuration of the docking interface 40, the electric cable arrangement 66, and the first and second internal coolant conduits 65, 64, there is provided a mounting frame arrangement 30 in which the electrical system components and the cooling systems are physically isolated from each other, enhancing both safety and efficiency.

The electric cable arrangement 66, the first internal coolant conduit 65, and the second internal coolant conduit 64 can be arranged inside the mounting frame arrangement 30 in several different manners. As shown in FIG. 6, the electric cable arrangement 66, the first internal coolant conduit 65, and the second internal coolant conduit 64 extends from the docking interface 40 to the respective electrical connection interface 63, inlet 61 and outlet 62.

In one example, as shown in FIG. 6, the electric cable arrangement 66, the first internal coolant conduit 65, and the second internal coolant conduit 64 are arranged in separate chambers 80, 80a to 80n, of the mounting frame arrangement 30. The use of separate chambers further provides for physically isolating the electrical and cooling systems from each other, thus further enhancing both safety and efficiency. As such, the mounting frame arrangement 30 here comprises a plurality of chambers 80.

As shown in FIG. 6, the mounting frame arrangement 30 comprises a first chamber 80a for the first internal coolant conduit 65, a second chamber 80b for the second internal coolant conduit 64, and a third chamber 80c for the electric cable arrangement 66. In this manner, the mounting frame arrangement 30 comprises a plurality of chambers 80, 80a, 80b, 80c for the individual accommodation of the first internal coolant conduit 65 in the first chamber, the individual accommodation of the second internal coolant conduit 64 in the second chamber, and the individual accommodation of the electric cable arrangement 66 in the third chamber.

Each one of the chambers 80, 80a to 80n defines a continuous passages between the docking interface 40 and the respective electrical connection interface 63, inlet 61 and outlet 62.

Moreover, in this example, the chambers 80, 80a to 80n defines a continuous passages between the respective electrical connection interface 63, inlet 61 and outlet 62 to corresponding additional inlet 17 for coolant, corresponding additional outlet 18 for coolant, and corresponding additional electrical connection interface 19. In this manner, the cooling system and electric connection system can continue to another component of the vehicle, such as the electric motor 7. As such, the mounting frame arrangement can be the primary interface for routing coolant and electric energy (e.g. power) to one or more units 20 and one or more electric consumers of the vehicle 1.

More specifically, the mounting frame arrangement 30 comprises the additional inlet 17 for coolant, the additional outlet 18 for coolant, and the additional electrical connection interface 19. As shown in FIG. 6, the additional inlet 17 for coolant, the additional outlet 18 for coolant, and the additional electrical connection interface 19 are arranged at an opposite side 34 of the mounting frame arrangement 30.

Accordingly, in FIG. 6, the inlet 61 for coolant, the outlet 62 for coolant, and the electrical connection interface 63 are arranged at first side 33 of the mounting frame arrangement 30, such as a transverse side. Moreover, the additional inlet 17 for coolant, the additional outlet 18 for coolant, and the additional electrical connection interface 19 are arranged at the side 34, which is here an opposite transverse side to the side 33. The sides 33 and 34 are thus longitudinal opposite to the side 33.

Moreover, the chambers 80 extend from the side 33 to the side 34. More specifically, the first chamber 80a for the first internal coolant conduit 65, the second chamber 80b for the second internal coolant conduit 64, and the third chamber 80c for the electric cable arrangement 66 extend between the transverse sides 33, 34. Analogously, the electric cable arrangement 66, the first internal coolant conduit 65, and the second internal coolant conduit 64 extend between the transverse sides 33, 34.

Moreover, the first chamber 80a for the first internal coolant conduit 65, the second chamber 80b for the second internal coolant conduit 64, and the third chamber 80c for the electric cable arrangement 66 extend to the corresponding docking interface 40b. Analogously, the electric cable arrangement 66, the first internal coolant conduit 65, and the second internal coolant conduit 64 extend to the corresponding docking interface 40b.

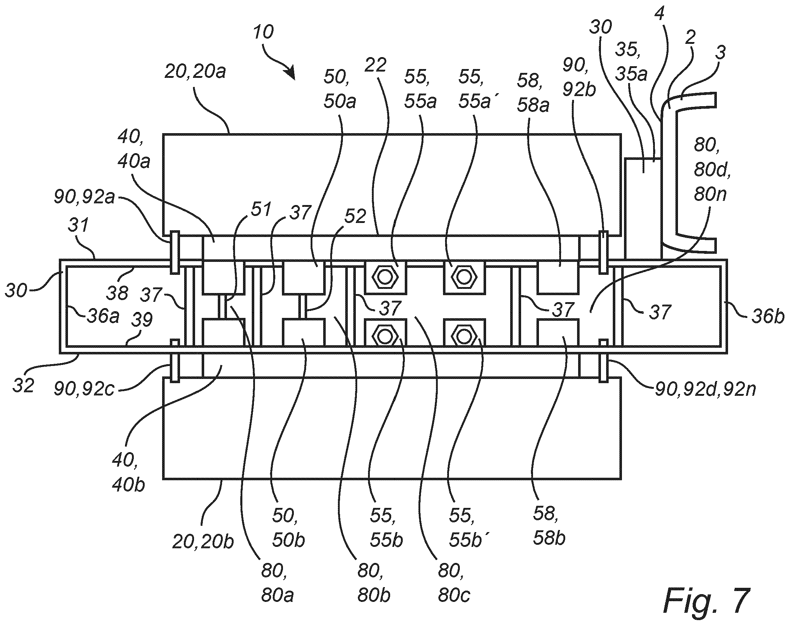

A chamber is typically defined by one or more wall segments of the mounting frame arrangement 30. More specifically, each passage of each chamber 80 is here defined by one or more corresponding wall segments. As such, as illustrated in FIG. 7, the chambers 80 of the mounting frame arrangement 30 are separated from each other by wall segments 37. The wall segments 37 provide structural integrity to the mounting frame arrangement 30 and ensure that the cooling and electrical systems remain isolated from each other. The wall segments 37 are here vertical wall segments.

The mounting frame arrangement 30 further comprises an upper side segment 38, a lower side segment 39, and one or more end segments 36a, 36b extending between the upper side segment 38 and the lower side segment 39. The segments 36a, 36b, 38 and 39 form a complete structure of the mounting frame arrangement 30. The segments 36a, 36b, 38 and 39 are arranged to collectively define at least a partly hollow mounting frame arrangement 30.

The upper side segment 38 is here an integral part of the upper side 31 of the mounting frame arrangement 30. The lower side segment 39 is here an integral part of the bottom side of the mounting frame arrangement 30. Typically, the mounting frame arrangement 30 comprises four end segments 36, such as two transverse end segments and two longitudinal end segments. One of the transverse end segments here comprises the coolant inlet 61, the coolant outlet 62, and the electrical connection interface 63, as shown in FIG. 3. Hence, one of the end segment 36 is here an integral part of the side 33.

Although the mounting frame arrangement 30 above has been described in relation to one electrochemical power unit 20, such as the first electrochemical power unit 20a, the mounting frame arrangement 30 may typically be configured to dock a plurality of electrochemical power units, such as the first electrochemical power unit 20a and a second electrochemical power unit 20b.

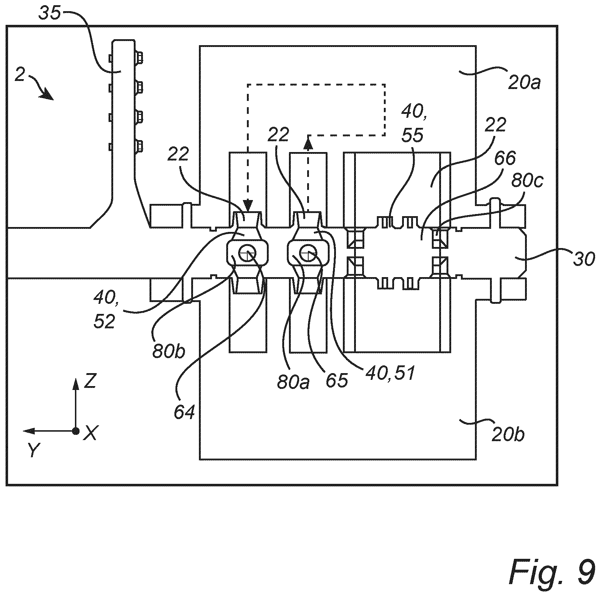

One example of such configuration is illustrated in FIG. 1 in conjunction with FIG. 9. As such, the mounting frame arrangement 30 comprises a first docking interface 40a and a second docking interface 40b. The first docking interface 40a is here configured to dock at least the first electrochemical power unit 20a to the mounting frame arrangement 30 and the second docking interface 40b is configured to dock the second electrochemical power unit 20b to the mounting frame arrangement 30. Each one of the first and second docking interfaces 40a, 40b comprises the features and components of the docking interface 40 as described herein. The docking interfaces 40a and 40b ensure that the electrochemical power units 20a and 20b are securely docked and correctly aligned to the mounting frame arrangement 30.

Similar to the mounting frame arrangement 30 configured to dock the first electrochemical power unit 20a to the mounting frame arrangement 30, the second docking interface 40b comprises a corresponding cooling system interconnection interface 50b for the second electrochemical power unit 20b. Hence, there is provided cooling system interconnection interfaces 50, 50a, 50b for both the first and second electrochemical power units 20a, 20b. The cooling system interconnection interface 50, 50a, 50b enable the connection of cooling systems for both electrochemical power units 20a, 20b to ensure that the units are maintained at an appropriate operating temperature. Hence, the first docking interface 40a comprises a first cooling system interconnection interface 50a for the first electrochemical power unit 20a and the second docking interface 40b comprises a second cooling system interconnection interface 50b for the second electrochemical power unit 20b, respectively.

Similar to the mounting frame arrangement 30 configured to dock the first electrochemical power unit 20a to the mounting frame arrangement 30, the second docking interface 40b comprises a corresponding electrical connection interconnection interface 55b. Hence, the first docking interface 40a comprises a first electrical connection interconnection interface 55a and the second docking interface 40b comprises a corresponding second electrical connection interconnection interface 55b.

Similar to the mounting frame arrangement 30 configured to dock the first electrochemical power unit 20a to the mounting frame arrangement 30, the mounting frame arrangement 30 here comprises the positioning supporting arrangement 90, 92a, 92b for the first electrochemical power unit 20a and a corresponding positioning supporting arrangement 90, 92c, 92d for the second electrochemical power unit 20b. The positioning supporting arrangement 90 is configured to guide the first electrochemical power unit 20a into a docking position relative to the mounting frame arrangement 30, and the corresponding positioning supporting arrangement 90 is configured to guide the second electrochemical power unit 20b into a corresponding docking position relative to the mounting frame arrangement 30.

Similar to the mounting frame arrangement 30 configured to dock the first electrochemical power unit 20a to the mounting frame arrangement 30, each one of the first and second electrochemical power units 20a, 20b is configured to be mechanically connected to the mounting frame arrangement 30. The mechanical connection ensures that the electrochemical power units 20a, 20b are securely attached and remain stable during vehicle operation, even in harsh driving conditions.

FIG. 9 illustrates a cross-sectional view of the mounting frame arrangement 30 and the electrochemical power units 20a, 20b. As shown, the first internal coolant conduit 65 is arranged in the first chamber 80a, the second internal coolant conduit 64 is arranged in the second chamber 80b, and the electric cable arrangement 66 is arranged in the third chamber 80c. Moreover, FIG. 9 illustrates how coolant from the first internal coolant conduit 65 enters the electrochemical power unit 20a through the docking interface 40a, via the coolant outlet 51, circulates through the electrochemical power unit 20a, and the return to the second internal coolant conduit 64 via the return inlet 52 of the docking interface 40a. The electric energy, or power, is transferred between the electric cable arrangement 66 and the electrochemical power unit 20a via the docking interface 40 and the electrical connection interconnection interface 55.

The first internal coolant conduit 65 and the first chamber 80a, the second internal coolant conduit 64 and the second chamber 80b, and the electric cable arrangement 66 and the third chamber 80c are here also continued to the corresponding docking interface 40b for the second electrochemical power unit 20b.

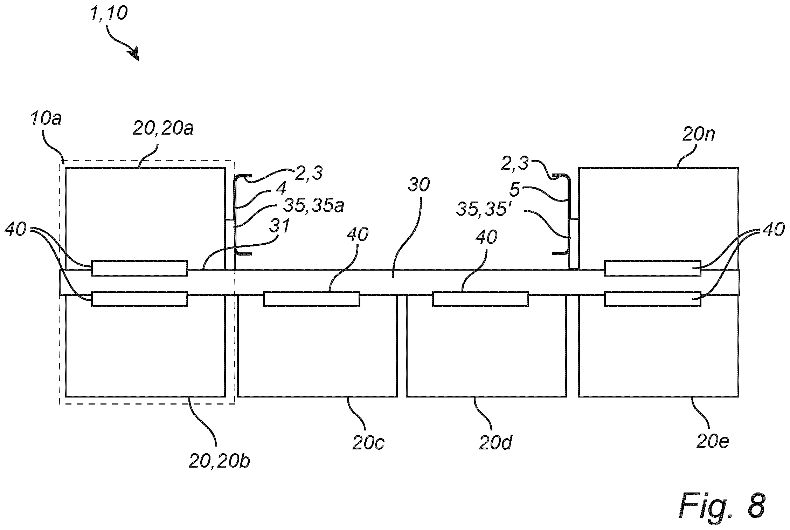

The disclosure also relates to an electrical energy storage system 10, as shown in FIGS. 1 to 9. The electrical energy storage system 10 includes at least one electrochemical power unit 20 and the mounting frame arrangement 30. FIG. 8 illustrates one configuration of an electrical energy storage system 10. In this example, the electrical energy storage system 10 comprises a plurality of electrochemical power units 20a to 20n and the mounting frame arrangement 30. Such electrical energy storage system 10 provides an integrated solution for energy storage within the vehicle 1, supporting either battery modules or fuel cells. FIG. 10 also shows a simplified example of an electrical energy storage system 10 in the form of an electrical energy storage system 10a. The electrical energy storage system 10a here comprises the first electrochemical power unit 20a, the second electrochemical power unit 20b, and the mounting frame arrangement 30.

The disclosure further relates to a vehicle 1, which comprises the mounting frame arrangement 30. The disclosure further relates to a vehicle 1, which comprises the electrical energy storage system 10. The use of the mounting frame arrangement 30 in the vehicle 1 ensures that the electrochemical power units are securely mounted and efficiently integrated with the vehicle's cooling and electrical systems.

The mounting frame arrangement 30 provides a secure and modular solution for integrating electrochemical power units into a vehicle. As described herein, the docking interface(s) 40 allow the electrochemical power unit(s) to be mounted onto the frame 30 in a non-permanent way, ensuring that the electrochemical power units can be swapped out or serviced without disturbing the rest of the structure. Hence, there is a technical distinction between a coupling interface 35 and a docking interface 40, even though both involve connecting components. The coupling interface 35 is configured to ensure a stable and secure connection between the mounting frame arrangement 30 and the chassis 2. The coupling of the mounting frame arrangement 30 to the frame structure 3 of the chassis 2 ensures that the electrochemical power units 20 are securely fixed along the longitudinal direction X of the chassis 2, corresponding to the longitudinal direction of the vehicle 1.

The use of separate chambers for the cooling and electrical systems ensures optimal safety and performance by preventing thermal and electrical interference. The modular design of the mounting frame arrangement 30 allows for flexibility in the configuration and type of electrochemical power units, enabling the use of either battery modules or fuel cells. The mounting frame arrangement 30 also provides ease of installation, maintenance, and replacement of individual electrochemical power units, making it suitable for a wide range of electric and hybrid vehicles.

The mounting frame arrangement 30 can be adapted for various vehicle types, including passenger cars, trucks, buses, and heavy-duty vehicles. The design may also support more than two electrochemical power units in stacked or in-line configurations, depending on the specific application.

The mounting frame arrangement 30 can be manufactured in several different manners. By way of example, the mounting frame arrangement 30 is an extruded profile structure. The use of an extruded profile structure allows for a lightweight yet robust design, which is cost-effective to manufacture and provides sufficient strength to support the electrochemical power units.

FIG. 7 illustrates one example of a top-and-bottom arrangement of the electrochemical power units. As shown in FIG. 7, the first electrochemical power unit 20a is connected to the upper side 31 of the mounting frame arrangement 30 and the second electrochemical power unit 20b is connected to the lower side 32 of the mounting frame arrangement 30. Such arrangement allows efficient use of space and enables the mounting of power units in vertically distinct positions.

For example, the first electrochemical power unit 20a and the second electrochemical power unit 20b extend in a longitudinal direction X, and are individually connected to respective upper and lower sides 31, 32 of the mounting frame arrangement 30 along the longitudinal direction X. Moreover, each one of the first electrochemical power unit and the second electrochemical power unit here extends substantially in the longitudinal direction X of the chassis 2.

In another example, as shown in FIG. 8, one electrochemical power unit 20c and another electrochemical power unit 20d are connected to the mounting frame arrangement 30 in a side-by-side arrangement, as seen in the transverse direction Y of the mounting frame arrangement 30. Such side-by-side arrangement offers an alternative configuration that enables the use of transverse space within the vehicle 1.

In this example, the lower side 32 is a ground-facing side of the mounting frame arrangement 30. As such, in one example, a set of electrochemical power units 20, 20c, 20d are here individually connected to the ground-facing side of the mounting frame arrangement 30.

The electrochemical power units 20, 20a to 20n can be distributed along the longitudinal direction X. In addition, or alternatively, the electrochemical power units 20, 20a to 20n can be distributed along the transvers direction Y. In addition, or alternatively, the electrochemical power units 20, 20a to 20n can be distributed along the vertical direction Z.

Moreover, as shown in e.g. FIG. 1, the electrochemical power units 20, 20a to 20n, are here arranged along the longitudinal direction X of the chassis 2, and between a first ground engaging member 9 and a second ground engaging member 9. In other words, the electrochemical power units 20, 20a to 20n are arranged within a wheelbase of the vehicle 1. As such, the mounting frame arrangement 30 is arranged within the wheelbase of the vehicle 1.

In one example, as shown in FIG. 7, the docking interface 40 comprises an additional electrical connection interconnection interface in the form of a low-voltage LV interconnection interface 58. Hence, the electrical connection interconnection interface here comprises a high-voltage HV interconnection interface 55 and a low-voltage LV interconnection interface 58. In FIG. 7, there is illustrated an example with two docking interfaces 40a, 40b, having two high-voltage HV interconnection interfaces 55a, 55b and two low-voltage LV interconnection interfaces 58a, 58b arranged in separate chambers 80c, 80d to ensure that high- and low-voltage components are kept separate from each other, enhancing safety.

As such, the mounting frame arrangement 30 comprises a plurality of electrical connection interconnection interfaces 55, 58 for the first electrochemical power unit 20a and the second electrochemical power unit 20b, respectively. FIG. 7 also schematically show an example of the arrangement of positive and negative terminals in the chamber 80c, such as the terminals 55a, 55a' of the electrical connection interconnection interfaces 55a of the first docking interface 40a. It should be noted that the electric cable arrangement 66 typically encompasses the cables to the terminals 55a, 55a', which are arranged in an electrical connection interconnection interface provided in the form of an electrical socket, or the like. In a similar manner, the electrical connection interconnection interfaces 55b of the second docking interface 40b comprises positive and negative terminals, here indicated by 55b, 55b'. It should be noted that the electric cable arrangement 66 typically encompasses the cables to the terminals 55a, 55a' and cables to the positive and negative terminals 55b, 55b'. The positive and negative terminals 55b, 55b' of the second docking interface 40b are also here arranged in an electrical connection interconnection interface provided in the form of an electrical socket, or the like.

As described herein, the electrochemical power units 20, 20a to 20n are provided in the form of battery modules comprising battery cells. In another example, the electrochemical power units 20, 20a to 20n are provided in the form of fuel cell systems, such as fuel cell stacks comprising fuel cells.

It is to be noted that the battery modules can include one or several number of battery pack(s). By way of example, any one of the battery modules is any one of a lithium-ion battery or sodium-ion battery. Also, it is to be noted that the battery module is generally a so called high voltage battery pack. The term "power", as used herein, typically refers to electrical power.

Moreover, the present disclosure may be exemplified by any one of the below examples.

Example 1: A mounting frame arrangement 30 for securing a at least one electrochemical power unit 20, 20a to 20n to a chassis 2 of a vehicle 1, wherein the mounting frame arrangement comprises: a coupling interface 35 for attachment of the mounting frame arrangement to the chassis; a docking interface 40 configured to dock the at least one electrochemical power unit 20a to the mounting frame arrangement, wherein the docking interface comprises a cooling system interconnection interface 50 for the at least one electrochemical power unit, and an electrical connection interconnection interface 55, 58 for the at least one electrochemical power unit.

Example 2: The mounting frame arrangement of example 1, wherein the docking interface comprises a positioning supporting arrangement 90 for the at least one electrochemical power unit, the positioning supporting arrangement being configured to guide the at least one electrochemical power unit into a docking position relative to the mounting frame arrangement.

Example 3: The mounting frame arrangement of example 2, wherein the positioning supporting arrangement comprises one or more guide pins 92, 92a to 92n for guiding the at least one first electrochemical power unit into the docking position relative to the mounting frame arrangement.

Example 4: The mounting frame arrangement of any previous examples, wherein the mounting frame arrangement comprises a plurality of chambers 80, 80a, 80b, 80c for individual accommodation of a first internal coolant conduit 65 in a first chamber, a second internal coolant conduit 64 in a second chamber, and an electric cable arrangement 66 in a third chamber.

Example 5: The mounting frame arrangement of example 4, wherein the electrical connection interconnection interface comprises a high-voltage HV interconnection interface for the at least one electrochemical power unit and a low-voltage LV interconnection interface 58, 58a, 58b for the at least first electrochemical power unit, and wherein the HV interconnection interface and the LV interconnection interface are arranged in separate chambers of the mounting frame arrangement.

Example 6: The mounting frame arrangement of any previous examples, further comprising a fastening system 70 configured to mechanically connect the at least one electrochemical power unit to the mounting frame arrangement.

Example 7: The mounting frame arrangement of any previous examples, wherein the coupling interface is configured to couple the mounting frame arrangement to one or more longitudinal sides 4, 5 of a frame structure 3 of the chassis.

Example 8: The mounting frame arrangement of any previous examples, further comprising an inlet 61 for coolant, an outlet 62 for coolant, and an electrical connection interface 63.

Example 9: The mounting frame arrangement of any previous examples, wherein the at least one electrochemical power unit is provided in the form of a battery module comprising battery cells, or wherein the at least one electrochemical power unit is provided in the form of a fuel cell system comprising fuel cells.

Example 10: The mounting frame arrangement of any previous examples, wherein the mounting frame arrangement is an extruded profile structure.

Example 11: The mounting frame arrangement of any previous examples, wherein the at least one electrochemical power unit is a first electrochemical power unit 20a, and wherein the mounting frame arrangement further comprises a corresponding docking interface 40b configured to dock a second electrochemical power unit 20b to the mounting frame arrangement.

Example 12: The mounting frame arrangement of example 11, wherein the docking interface 40a is arranged on an upper side 31 of the mounting frame arrangement so as to dock the first electrochemical power unit to the upper side, and the corresponding docking interface 40b is arranged on a lower side 32 of the mounting frame arrangement so as to dock the second electrochemical power unit to the lower side.

Example 13: The mounting frame arrangement of example 11, wherein the docking interface 40a and the corresponding docking interface 40a are arranged on a lower side 32 of the mounting frame arrangement so as to dock the first electrochemical power unit and the second electrochemical power unit to the lower side of the mounting frame arrangement.

Example 14: The mounting frame arrangement of any of the previous examples, wherein the cooling system interconnection interface 50 comprises a quick-release coupling for fluidly connecting and disconnecting the coolant conduits of the at least one electrochemical power unit to the cooling system.

Example 15: The mounting frame arrangement of any of the previous examples, wherein the electrical connection interconnection interface 55, 58 comprises an electrical socket.

Example 16: The mounting frame arrangement of any of the previous examples, wherein the docking interface 40 further comprises a vibration damping system to reduce mechanical stresses on the at least one electrochemical power unit during operation.

Example 17: The mounting frame arrangement of any of the previous examples, further comprising an additional docking interface configured to dock a third electrochemical power unit 20c in addition to the first 20a and second electrochemical power units 20b, with corresponding electrical and cooling interconnection interfaces.

Example 18: The mounting frame arrangement of any of the previous examples, wherein the coupling interface is provided in the form of a bracket.

Example 19: An electrical energy storage system 10 comprising at least a first electrochemical power unit, a second electrochemical power unit and a mounting frame arrangement according to any one of the previous examples.

Example 20: A vehicle 1 comprising a mounting frame arrangement 30 according to any previous examples 1 to 18 and/or an electrical energy storage system according to example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A mounting frame arrangement (30) for securing at least one electrochemical power unit (20, 20a to 20n) to a chassis (2) of a vehicle (1), wherein the mounting frame arrangement comprises:
- a coupling interface (35) for attachment of the mounting frame arrangement to the chassis; and
- a docking interface (40) configured to dock the at least one electrochemical power unit (20a) to the mounting frame arrangement, wherein the docking interface comprises a cooling system interconnection interface (50) for the at least one electrochemical power unit, and an electrical connection interconnection interface (55, 58) for the at least one electrochemical power unit.

2. The mounting frame arrangement of claim 1, wherein the docking interface comprises a positioning supporting arrangement (90) for the at least one electrochemical power unit, the positioning supporting arrangement being configured to guide the at least one electrochemical power unit into a docking position relative to the mounting frame arrangement.

3. The mounting frame arrangement of claim 2, wherein the positioning supporting arrangement comprises one or more guide pins (92, 92a to 92n) for guiding the at least one first electrochemical power unit into the docking position relative to the mounting frame arrangement.

4. The mounting frame arrangement of any previous claims, wherein the mounting frame arrangement comprises a plurality of chambers (80, 80a, 80b, 80c) for individual accommodation of a first internal coolant conduit (65) in a first chamber, a second internal coolant conduit (64) in a second chamber, and an electric cable arrangement (66) in a third chamber.

5. The mounting frame arrangement of claim 4, wherein the electrical connection interconnection interface comprises a high-voltage (HV) interconnection interface for the at least one electrochemical power unit and a low-voltage (LV) interconnection interface (58, 58a, 58b) for the at least first electrochemical power unit, and wherein the HV interconnection interface and the LV interconnection interface are arranged in separate chambers of the mounting frame arrangement.

6. The mounting frame arrangement of any previous claims, further comprising a fastening system (70) configured to mechanically connect the at least one electrochemical power unit to the mounting frame arrangement.

7. The mounting frame arrangement of any previous claims, wherein the coupling interface is configured to couple the mounting frame arrangement to one or more longitudinal sides (4, 5) of a frame structure (3) of the chassis.

8. The mounting frame arrangement of any previous claims, further comprising an inlet (61) for coolant, an outlet (62) for coolant, and an electrical connection interface (63).

9. The mounting frame arrangement of any previous claims, wherein the at least one electrochemical power unit is provided in the form of a battery module comprising battery cells, or wherein the at least one electrochemical power unit is provided in the form of a fuel cell system comprising fuel cells.

10. The mounting frame arrangement of any previous claims, wherein the mounting frame arrangement is an extruded profile structure.

11. The mounting frame arrangement of any previous claims, wherein the at least one electrochemical power unit is a first electrochemical power unit (20a), and wherein the mounting frame arrangement further comprises a corresponding docking interface (40b) configured to dock a second electrochemical power unit (20b) to the mounting frame arrangement.

12. The mounting frame arrangement of claim 11, wherein the docking interface (40a) is arranged on an upper side (31) of the mounting frame arrangement so as to dock the first electrochemical power unit to the upper side, and the corresponding docking interface (40b) is arranged on a lower side (32) of the mounting frame arrangement so as to dock the second electrochemical power unit to the lower side.

13. The mounting frame arrangement of claim 11, wherein the docking interface (40a) and the corresponding docking interface (40a) are arranged on a lower side (32) of the mounting frame arrangement so as to dock the first electrochemical power unit and the second electrochemical power unit to the lower side of the mounting frame arrangement.

14. An electrical energy storage system (10) comprising at least a first electrochemical power unit, a second electrochemical power unit and a mounting frame arrangement according to any one of the previous claims.

15. A vehicle (1) comprising a mounting frame arrangement (30) according to any previous claims 1 to 13 and/or an electrical energy storage system according to claim 14.
